Europäisches Patentamt

(19) European Patent Office

Office européen des brevets

(11) Publication number: **0 201 264**
**B1**

# EUROPEAN PATENT SPECIFICATION

(45) Date of publication of the patent specification:
**22.02.89**

(51) Int. Cl.⁴: **C01B 33/28,** B01J 29/28,
C10G 11/05, C10G 49/08

(21) Application number: **86303222.3**

(22) Date of filing: **29.04.86**

(54) A method for producing zeolite-containing particles.

(30) Priority: **08.05.85 US 732035**

(43) Date of publication of application:
**17.12.86 Bulletin 86/46**

(45) Publication of the grant of the patent:
**22.02.89 Bulletin 89/8**

(84) Designated Contracting States:
**BE DE FR GB IT NL SE**

(56) References cited:
**EP-A- 0 134 333**
**DE-A- 2 909 929**
**DE-A- 3 028 785**
**DE-A- 3 347 123**
**US-A- 4 468 475**

(73) Proprietor: **MOBIL OIL CORPORATION, 150 East 42nd
Street, New York New York 10017(US)**

(72) Inventor: **Britton, William Gabriel, 235 Marshall Avenue,
Gibbstown New Jersey 08027(US)**
Inventor: **Rollmann, Louis Deane, 6235 Pineview Road,
Dallas Texas 75248(US)**

(74) Representative: **Cooper, John Anthony et al, Mobil
Court 3 Clements Inn, London WC2A 2EB(GB)**

## Description

This invention relates to a method for producing zeolite-containing particles.

Crystalline zeolites have been prepared from mixtures of oxides including sodium oxide, alumina, silica and water. More recently clays and coprecipitated aluminosilicate gels, in the dehydrated form, have been used as sources of alumina and silica in zeolite reaction systems.

Seeding is a recognized method of initiating crystallization in zeolite synthesis. Generally in seeding, a small quantity of the desired product is injected into a suitable reaction mixture and, with good mixing, these crystals are circulated to provide nucleation sites for the formation of the net product. U.S. Patent No. 3 671 191 teaches a general seeding technique.

Most commonly, zeolite crystals are incorporated with a binder, i.e. a matrix, to form a catalyst or adsorbant particle. Such matrix is useful not only as a binder, but also to impart greater temperature and impact resistant to the catalyst.

It is recognized in the art that pre-formed catalyst matrix particles can also be transformed under certain conditions into zeolites. The use of matrices to form zeolites is described in many patents including U.S. Patent Nos. 3 746 659; 3 752 772; 3 773 391; 3 694 152; 3 663 456; 3 650 687; 3 647 718; 3 642 662 and 3 545 921. The most common matrix material used in the prior art to form zeolites is a clay, especially kaolin clay.

U.S. Patent 4 091 007 describes an improved method for preparing ZSM-5 by crystallizing a reaction mixture including clay as the major source of alumina, an added source of silica, water and an added source of cations.

The use of pre-formed and high clay content matrix particles places special restrictions on subsequent zeolite crystallization. When clays are used exclusively, the matrix particles tend to be fairly high in aluminum content. Another problem in the use of matrix particles is the tendency for these particles to serve simply as a source of nutrients for crystallization quite exterior to, and physically independent of the original matrix.

It is an object of this invention to furnish a method of fixing siliceous zeolite crystals in a pre-formed matrix. It is further object of the present invention to grow zeolite crystals within a pre-formed matrix, thus forming a matrix-containing zeolite which can be readily used as a catalyst or adsorbant particle. It will be appreciated that whereas conventional techniques for the manufacture of bound zeolite particles comprise two general steps, namely zeolite formation and then incorporation of said zeolite in a matrix, the present method allows these two general steps to be combined into a single operation with the attendant benefits of shorter zeolite crystallization time, higher zeolite yields and lower catalyst/absorbent manufacturing costs. An unexpected result of the present method is the unique morphology and crystal size of the resulting zeolite particles.

In accordance with the present invention, there is now provided a method for producing zeolite-containing particles, in which the zeolite has a silica to alumina mole ratio of at least 12, the method comprising the steps of compositing seed crystals of the desired zeolite with a matrix material, such that said seed crystals comprise from 0.01 to 2.0 wt. percent of said matrix material, preforming said matrix material containing said seed crystals into particles and then contacting said pre-formed particles under reaction conditions including a temperature of from 60°C to 250°C with zeolite producing reactants comprising an alkaline aqueous solution to form a reaction mixture in order to crystallize said zeolite within said pre-formed particles, the weight ratio of said aqueous solution to said pre-formed particles being from 0.1 to 50, and the pH of said reaction mixture being in excess of 7, and recovering said particles containing from 3% to 60% of said zeolite.

Thus the present invention provides a method of producing siliceous zeolite crystals, i.e. having a silica to alumina mole ratio of at least 12, within a pre-formed matrix. This is accomplished by depositing seed crystals of the desired zeolite in the pre-formed matrix and then contacting the product with a zeolite forming mixture. Since circulation of the seed crystals cannot occur (since these seed crystals are fixed and imbedded within the matrix), it would seem at first glance that they would not be effective in promoting the crystallization of zeolites. Surprisingly, however, it is found that these imbedded seed crystals are effective in accelerating crystallization of zeolites.

The crystalline zeolites produced by the present method are members of a unique class of zeolitic materials which exhibit unusual properties. Although these zeolites have unusually low alumina contents, i.e. high silica to alumina mole ratios, they are very active even when the silica to alumina mole ratio exceeds 30. The activity is surprising since catalytic activity is generally attributed to framework aluminum atoms and/or cations associated with these aluminum atoms. These zeolites retain their crystallinity for long periods in spite of the presence of steam at high temperature which induces irreversible collapse of the framework of other zeolites, e.g. of the X and A type. Furthermore, carbonaceous deposits, when formed, may be removed by burning at higher than usual temperatures to restore activity. These zeolites, used as catalysts, generally have low coke-forming activity and therefore are conducive to long times on stream between regenerations by burning carbonaceous deposits with oxygen-containing gas such as air.

With pure zeolite samples, the silica to alumina mole ratio referred to may be determined by conventional analysis. This ratio is meant to represent, as closely as possible, the ratio in the rigid anionic framework of the zeolite crystal and to exclude aluminum in the binder or in cationic or other form within the channels. Although zeolites with a silica to alumina ratio of at least 12 are useful, it is preferred in some applications to use zeolites having higher silica/alumina ratios of at least about 30. In addition, zeolites having very little aluminum, i.e. having sili-

ca to alumina mole ratios of 1,600 and higher, are found to be useful and even preferable in some instances.

An important characteristic of the crystal structure of certain zeolites in this unique class of zeolites is that they exhibit selective constrained access to and egress from the intracrystalline free space by virtue of having an effective pore size intermediate between the small pore Linde A and the large pore Linde X, i.e. the pore windows of the structure are of about a size such as would be provided by 10-membered rings of silicon atoms interconnected by oxygen atoms. It is to be understood, of course, that these rings are those formed by the regular disposition of the tetrahedra making up the anionic framework of the crystalline zeolite, the oxygen atoms themselves being bonded to the silicon (or aluminum, etc.) atoms at the centers of the tetrahedra.

Such preferred zeolites have an effective pore size such as to freely sorb normal hexane. In addition, the structure should provide constrained access to larger molecules. It is sometimes possible to judge from a known crystal structure whether such constrained access exists. For example, if the only pore windows in a crystal are formed by 8-membered rings of silicon and aluminum atoms, then access by molecules of larger cross-section than normal hexane is excluded and the zeolite is not of the preferred type. Windows of 10-membered rings are preferred, although in some instances excessive puckering of the rings or pore blockage may render these zeolites ineffective. Although 12-membered rings in theory would not offer sufficient constraint, it is noted that the puckered 12-ring structure of TMA offretite shows some constrained access.

Rather than attempt to judge from crystal structure whether or not a zeolite possesses the necessary constrained access to molecules of larger cross-section than normal paraffins, a simple determination of the "Constraint Index" of the zeolite may be made as described in, for example, U.S. Patent No. 4 016 218. Preferred zeolites for use in the present method have a Constraint Index of 1 to 12.

Examples of such preferred zeolites are ZSM-5, ZSM-11, ZSM-12, ZSM-23, ZSM-35 and ZSM-38, with ZSM-5 being especially preferred. ZSM-5 is described in greater detail in U.S. Patents No. 3 702 886, Re. No. 29 948, No. 4 139 600 and No. 4 100 262. ZSM-11 is described in greater detail in U.S. Patents No. 3 709 979 and No. 4 108 881. ZSM-12 is described in U.S. Patent No. 3 832 449. ZSM-23 is described in U.S. Patent No. 4 076 842. ZSM-35 is described in U.S. Patent No. 4 016 245 and No. 4 107 195. ZSM-38 is more particularly described in U.S. Patent No. 4 046 859.

Useful matrix materials for the pre-formed matrix of the present method include both synthetic and naturally occurring substances, as well as inorganic materials such as clay, silica, and/or metal oxides. The metal oxides may be either naturally occurring or in the form of gelatinous precipitates or gels including mixtures of silica and metal oxides. Non-limiting examples of such porous matrix materials include silica, silica-alumina, silica-thoria, silica-magnesia, silica-zirconia, silica-berylia and silica-titania, as well as ternary compositions, such as silica-alumina-thoria, silica-alumina-zirconia silica-alumina-magnesia and silica-magnesia-zirconia.

Clay materials for use as matrix materials in the present invention include compositions composed primarily of clay minerals identified as hydrated aluminum silicates. Said hydrated aluminum silicate clay mineral may have associated therewith one or more metal or metal oxides selected from the group consisting of Group IA, IIA and VIII of the Periodic Table of the Elements (Sargent-Welch Company, 1968). Non-limiting examples of such hydrated aluminum silicate minerals which comprise the major proportion of clays for use in this invention include kaolinite, halloysite, montmorillonite, illite and attapulgite. Clays containing these minerals are represented by such non-limiting examples as fuller's earth (containing attapulgite with some montmorillonite), kaolin (constituted of mainly kaolinite) and bentonite (containing appreciable amounts of montmorillonite and usually having some magnesium and iron associated therewith).

Only a small amount of zeolite seeds are needed for the present method, namely 0.01% by to 2.0% of seeds by weight of the matrix. It is preferred to use from about 0.1% to 1.0% of seeds by weight of the matrix. The seed used depends on the zeolite desired to be produced. For example, ZSM-5 seeds produce ZSM-5 zeolite and ZSM-11 seeds produce ZSM-11 zeolite.

It is preferred to form the seeded matrix particles by intimately admixing seed crystals with an inorganic oxide matrix while the latter is in a hydrous state (slurry-type material) such as in the form of a hydrosol, hydrogel, wet gelatinous precipitate, or a mixture thereof. If a hydrosol is formed, it can be permitted to set in mass to form a hydrogel which can thereafter be shaped, dried or spray-dried by conventional techniques. Alternatively, extrusion or pelletizing can be employed to form discrete particles. Once the particle is formed, its dimensions and geometry will be essentially fixed and will not be subject to substantial change during crystallization of the zeolite.

The seeded matrix particles are then contacted with a zeolite forming mixture under the proper reaction conditions to crystallize the desired zeolite within the matrix. In particular, the seeded matrix particles are contacted with an alkaline aqueous forming solution such that the weight ratio of said aqueous solution to said particles is between 0.1 and 50, preferably between 1.0 and 10. Hydroxide concentration in the initial forming solution will in general, be between 0.01 and 3.0 molar, preferably between 0.1 and 2.0 molar so as to ensure a final pH of solid-solution mixture in excess of 7.0. Preferably, the seeded matrix particles are contacted with the zeolite forming mixture without undergoing an initial calcination step.

Conventional zeolite forming mixtures are employed and comprise sources of an alkali metal oxide, e.g. a sodium oxide, an oxide of silicon (silica), an oxide of aluminum (alumina), water, and, if desired, a source of an organic nitrogen containing cation, such as an amine or diamine; e.g., butylamine, pentanediamine, hexanediamine; a tetraalkylammonium compound, e.g. a tetramethylammonium compound, a tetraethylammonium compound, a tetrabutylammonium compound, or a tetrapropylammonium compound; an alkylenediamine, e.g. polymethylenediamine; pyrrolidine or a tetraureacobalt (II) complex. In preparation of "extremely highly siliceous" zeolites such as those disclosed in U.S. Patent Re. No. 29 948, no source of an oxide of aluminum is employed in the reaction mixture.

The matrix material may also serve as a source of reactants. Thus the matrix may supply all or some of the required silica, alumina, or alkali metal. Additionally the matrix material may contain a zeolite with a silica to alumina mole ratio of less than 12, e.g. a synthetic faujasite type zeolite.

Generally, organic compounds will be present in the initial forming solution in a concentration of between 0.01 and 2.0 molar, preferably between 0.05 and 1.0 molar.

Crystallization is performed either at atmospheric pressure or under elevated pressure in an autoclave or static bomb reactor at pressures in the range of between 100 to 6080 kPa (1 and 60 atmospheres.) Crystallization is generally carried out at a temperature of 60°C to 250°C, but at lower temperatures in this range, e.g. below about 100°C, crystallization time is longer. Typical reaction conditions comprise maintaining the reaction mixture and the seeded matrix at a temperature of 80°C to 200°C for 1 hour to 60 days, more preferably at a temperature of 95°C to 160°C for 3 hours to 14 days. Thereafter, the matrix particles containing the crystallized zeolite are separated from the liquid and recovered.

Separation is conveniently effected by cooling the entire mixture to room temperature and then filtering and water washing the solid product. The product so obtained is dried, e.g. at 110°C, for from 1 hour to 8 hours. If desired, milder conditions may be employed, e.g. room temperature under vacuum. The final product is a matrix containing 3% to 60%, preferably 5% to 40% of the required zeolite, with the remainder being the matrix. The final product exhibits unexpected morphology and crystal size.

The following examples will serve to illustrate the invention.

## EXAMPLE 1

Two clay-containing catalyst matrices were spray-dried in side-by-side experiments, one containing 1% ZSM-5 crystals, the other containing none. They analyzed as follows:

|  | With crystals | Without |
|---|---|---|
| $SiO_2/Al_2O_3$ | 5.31 | 5.70 |
| Surface area (m²/g) | 204 | 220 |

No ZSM-5 was detected by X-ray diffraction in either material. The same clay-containing catalyst matrices utilized in Example 1 were employed in the following Examples 2 to 8. The matrix containing the crystals is referred to as "spray-dried, seeded material" and the matrix without crystals is referred to as "unseeded material".

## EXAMPLE 2

Twenty grams of spray-dried, seeded material was combined with a solution of 0.20 g NaOH, 1.33 g TPABr and 2.58 g NaBr in 20 g water. The mixture was placed in a steam chest at 95°C. After one week, X-ray diffraction showed the solid to contain 35% ZSM-5. When the same treatment was given to the unseeded material, the solid contained only 15% ZSM-5. Thus the seeded material gave a greater zeolite yield than the unseeded material.

To show that the 35% ZSM-5 sample was not just a physical mixture of crystals with matrix particles, the sample was separated on a 200 mesh (0.074 mm) screen. The portion passing through 200 mesh (0.074 mm) analyzed 35% ZSM-5; that retained, 38%.

## EXAMPLE 3

Twenty grams of seeded material was treated as in Example 2 except that 40 g water was used. After 1 week, the solid contained 30% ZSM-5 whereas the unseeded material had only 10%.

## EXAMPLE 4

Twenty grams of spray-dried, seeded material was combined with a solution of 2.04 g of 25% TPA hydroxide in 19 g water. The mixture was placed in a steam chest at 95°C. After one week, X-ray diffraction showed the solid to contain 30% ZSM-5. When the same treatment was used on unseeded material, the solid contained only 20% ZSM-5.

## EXAMPLE 5

Eighty grams of spray-dried, seeded material was combined with a solution of 0.8 g NaOH, 10.3 g NaBr and 5.3 g TPABr in 80 g water. The mixture was placed in a 300 cc stainless steel autoclave and heated 4 hours at 160°C with slow stirring. After cooling, filtering and drying, the product solid contained 16% ZSM-5. When the same treatment was employed with unseeded material, the solid contained only 2% ZSM-5.

## EXAMPLE 6

Example 5 was repeated, but with 0.4 g NaOH, 5.3 g TPABr and no NaBr. After 6 hours at 160°C, the seeded material contained 15% ZSM-5; the unseeded sample contained only 2% ZSM-5.

## EXAMPLE 7

Example 5 was repeated, but with 120 g solid, 1.2 g NaOH, 7.95 g TPABr and 60 g $H_2O$. After 6 hours at 160°C, the seeded material contained 15% ZSM-5; the unseeded sample contained only 3% ZSM-5.

EXAMPLE 8

This Example will serve to illustrate the necessity of alkalinity. The experiment of Example 5 was repeated, but with no NaOH. After 6 hours at 160°C, no crystallinity was found in either the seeded or unseeded matrix.

EXAMPLE 9

This example shows that the procedures of this invention would not destroy a synthetic faujasite type zeolite if it were present in the precursor composite. 40 grams of NaY were combined with 80 g water and 16.2 g 25% TPA OH. After 6 hours in an autoclave at 160°C, the solid was filtered and dried. X-ray analysis showed it to be 100% NaY.

## Claims

1. A method for producing zeolite-containing particles, in which the zeolite has a silica to alumina mole ratio of at least 12, the method comprising the steps of compositing seed crystals of the desired zeolite with a matrix material, such that said seed crystals comprise from 0.01 to 2.0 wt. percent of said matrix material, preforming said matrix material containing said seed crystals into particles and then contacting said pre-formed particles under reaction conditions including a temperature of from 60°C to 250°C with zeolite producing reactants comprising an alkaline aqueous solution to form a reaction mixture in order to crystallize said zeolite within said pre-formed particles, the weight ratio of said aqueous solution to said pre-formed particles being from 0.1 to 50, and the pH of said reaction mixture being in excess of 7, and recovering said particles containing from 3% to 60% of said zeolite.

2. The method of claim 1 wherein the amount of seed crystals is between 0.1 and 1.0 wt. percent of the matrix.

3. The method of claim 1 or claim 2 wherein said zeolite is selected from the group ZSM-5, ZSM-11, ZSM-12, ZSM-23, ZSM-35 and ZSM-38.

4. The method of any preceding claim wherein said reactants comprise sources of an alkali metal oxide, an oxide of silicon, water, and organic nitrogen-containing cations.

5. The method of claim 4 wherein said reactants further comprise a source of an oxide of aluminum.

6. The method of claim 4 or claim 5 wherein said matrix serves as a source of an oxide of silicon, of an alkali metal oxide and/or of an oxide of aluminum.

7. The method of claim 1 wherein the pre-formed matrix is prepared from a clay.

8. The method of any preceding claim wherein said reaction conditions include a pressure of between 100 and 6080 kPa (1 and 60 atmospheres) and a contact of time of between 1 hour and 60 days.

9. The method of any preceding claim wherein said pre-formed particles are contacted with said zeolite producing reactants without an intervening heat treatment step on the particles.

10. A process for converting feedstock comprising hydrocarbon compounds to product comprising hydrocarbon compounds of lower molecular weight than the feedstock hydrocarbon compounds which comprises contacting said feedstock at conversion conditions with a catalyst comprising an active form of zeolite-containing particles produced by a method of any preceding claim.

## Patentansprüche

1. Verfahren zur Herstellung Zeolith enthaltender Partikel, worin der Zeolith ein Siliciumdioxid/Aluminiumoxid-Molverhältnis von mindestens 12 aufweist, wobei dieses Verfahren die Schritte des Mischens von Kristallkeimen des gewünschten Zeoliths mit dem Matrixmaterial, so daß die Kristallkeime von 0,01 bis 2,0 Gew.-% des Matrixmaterials umfassen, des Vorformens dieses die Kristallkeime enthaltenden Matrixmaterials in Partikel und des anschließenden Kontaktes dieser vorgeformten Partikel bei Reaktionsbedingungen, die eine Temperatur von 60°C bis 250°C umfassen, mit Zeolith erzeugenden Reaktanten, die eine alkalische wässrige Lösung umfassen, um eine Reaktionsmischung zu bilden, um den Zeolith in den vorgeformten Partikeln zu kristallisieren, wobei das Gewichtsverhältnis der wässrigen Lösung zu den vorgeformten Partikeln von 0,1 bis 50 beträgt und der pH-Wert der Reaktionsmischung größer als 7 ist, und der Rückgewinnung dieser Partikel umfaßt, die von 3 bis 60% des Zeoliths enthalten.

2. Verfahren nach Anspruch 1, worin die Menge der Kristallkeime zwischen 0,1 und 1 Gew.-% der Matrix beträgt.

3. Verfahren nach Anspruch 1 oder 2, worin der Zeolith aus der Gruppe ZSM-5, ZSM-11, ZSM-12, ZSM-23, ZSM-35 und ZSM-38 ausgewählt ist.

4. Verfahren nach einem der vorstehenden Ansprüche, worin die Reaktanten Quellen eines Alkalimetalloxids, eines Siliciumoxids, Wasser und organische stickstoffhaltige Kationen umfassen.

5. Verfahren nach Anspruch 4, worin die Reaktanten darüberhinaus eine Quelle eines Aluminiumoxids umfassen.

6. Verfahren nach Anspruch 4 oder Anspruch 5, worin die Matrix als Quelle des Siliciumoxids, des Alkalimetalloxids und/oder des Aluminiumoxids dient.

7. Verfahren nach Anspruch 1, worin die vorgeformte Matrix aus Ton hergestellt wird.

8. Verfahren nach einem der vorstehenden Ansprüche, worin die Reaktionsbedingungen einen Druck von zwischen 100 und 6080 kPa (1 und 60 Atmosphären) und eine Kontaktzeit zwischen 1 Stunde und 60 Tagen umfassen.

9. Verfahren nach einem der vorstehenden Ansprüche, worin die vorgeformten Partikel ohne einen dazwischenliegenden Wärmebehandlungsschritt für diese Partikel mit den Zeolith erzeugenden Reaktanten in Kontakt gebracht werden.

10. Verfahren zur Umwandlung eines Kohlenwasserstoffverbindungen enthaltenden Ausgangsmaterials in ein Produkt, das Kohlenwasserstoffverbindungen mit geringerem Molekulargewicht als die Kohlenwasserstoffverbindungen des Ausgangsmaterials umfaßt, welches den Kontakt dieses Ausgangsmaterials unter Umwandlungsbedingungen mit einem Katalysator umfaßt, der eine aktive Form von Zeolith enthaltenden Partikeln umfaßt, die nach einem Verfahren der vorstehenden Ansprüche hergestellt wurden.

**Revendications**

1. Un procédé de production de particules contenant une zéolite dans laquelle la zéolite présente un rapport silice/alumine d'au moins 12, ce procédé comprenant les étapes de mélange de cristaux formant germes de la zéolite recherchée avec une matière formant support de sorte que lesdits cristaux formant germes constituent de 0,01 à 2,0% en poids de ladite matière formant support, le préformage en particules de ladite matière de la matrice contenant les cristaux formant germes, puis le contact desdits particules préformées dans des conditions réactionnelles incluant une températur comprise entre 60°C et 250°C avec lesdits réactifs producteurs de zéolite consistant en une solution aqueuse alcaline pour former un mélange réactionnel dans lequel ladite zéolite cristallise au sein des particules préformées le rapport pondéral de ladite solution aqueuse auxdites particules préformées étant compris entre 0,1 et 50, et le pH dudit mélange réactionnel étant supérieur à 7, puis à récupérer lesdites particules contenant de 3 à 60% de ladite zéolite.

2. Le procédé selon la revendication 1, dans lequel la quantité de cristaux formant germes est comprise entre 0,1 et 1% en poids de la matrice.

3. Le procédé selon la revendication 1 ou la revendication 2, dans lequel ladite zéolite est choisie dans le groupe comprenant ZSM-5, ZSM-11, ZSM-12, ZSM-23, ZSM-35 et ZSM-38.

4. Le procédé selon l'une quelconque des revendications précédentes, dans lequel lesdits réactifs contiennent des sources d'un oxyde de métal alcalin, un oxyde de silicium, de l'eau et des cations contenant de l'azote organique.

5. Le procédé selon la revendication 4, dans lequel lesdits réactifs comprennent en outre une source d'un oxyde d'aluminium.

6. Le procédé selon la revendication 4 ou la revendication 5, dans lequel ladite matrice sert de source d'un oxyde de silicium, d'un oxyde de métal alcalin et/ou d'un oxyde d'aluminium.

7. Le procédé selon la revendication 1, dans lequel la matrice préformée est obtenue à partir d'argile.

8. Le procédé selon l'une quelconque des revendications précédentes, dans lequel lesdites conditions réactionnelles incluent une pression comprise entre 100 et 6080 kPa (1 à 60 atmosphères) et la durée de contact est comprise entre 1 heure et 60 jours.

9. Le procédé selon l'une quelconque des revendications précédentes, dans lequel lesdites particules préformées sont mises au contact desdits réactifs producteurs de zéolite sans étape de traitement thermique nécessaire des particules.

10. Un procédé de conversion d'une charge comprenant des composés hydrocarbonés pour produire des composés hydrocarbonés de poids moléculaire inférieur à ceux des composés hydrocarbonés de la charge, lequel procédé consiste à mettre ladite charge, au contact dans des conditions de conversion, d'un catalyseur consistant en une forme active de particules contenant de la zéolite produite par une méthode selon l'une quelconque des revendications précédentes.